# EUROPEAN PATENT APPLICATION

(11) **EP 4 779 585 A1**
(43) Date of publication of application: **22.07.2026**
(21) Application number: 25152149.8
(22) Date of filing: 16.01.2025
(51) Int. Cl.: G06V 10/80, G06V 10/82, G06V 20/58

(54) **OBJECT DETECTION IN AN ENVIRONMENT OF A VEHICLE IN BIRD'S-EYE-VIEW PERSPECTIVE**

(71) Applicant: Valeo Schalter und Sensoren GmbH, 74321 Bietigheim-Bissingen (DE)
(72) Inventor: Hogan, Ciarán, Tuam, H54 Y276 (IE); SISTU, Ganesh, Tuam, H54 Y276 (IE); SRINIVASAN, Suganthi, 600130 Chennai (IN); DAS, Arindam, 600130 Chennai (IN); DESHPANDE, Prasad, Tuam, H54 Y276 (IE)
(74) Representative: Jauregui Urbahn, Kristian

(57) **Abstract**

In a computer-implemented method for object detection in an environment of a vehicle (1), sensor data (11) generated by an environmental sensor system (3) of the vehicle (1) and representing the environment is received, and a trained machine learning model, MLM, (10) trained for object detection in a bird-eye-view-, BEV-, perspective is applied to the sensor data (11) to generate output data (12). The output data (12) comprises a location of an object (5) in the environment within a predefined grid (6) in the BEV-perspective. Therein, a cell size of the grid (6) increases with a distance from the vehicle (1) at least for a predefined direction

## Description

The present invention is directed to a computer-implemented method for object detection in an environment of a vehicle, in particular a motor vehicle, wherein sensor data generated by an environmental sensor system of the vehicle and representing the environment is received and a trained machine learning model, MLM, trained for object detection in a bird's-eye-view-, BEV-, perspective is applied to the sensor data to generate output data, which comprises a location of an object in the environment. The invention is further directed to a method for guiding a vehicle at least in part automatically, wherein said computer-implemented method is carried out and to a data processing system for carrying out said computer-implemented method. The invention is also directed to an electronic vehicle guidance system comprising said data processing system and to corresponding computer program products.

Object detection by using trained MLMs, in particular artificial neural networks, ANNs, in the automotive context is well known. The results of the object detection may be used in various applications including advanced driver assistance systems, ADAS, and other applications for guiding the vehicle automatically or in part automatically.

Furthermore, it is also well known to carry out the object detection or other perception tasks, also denoted as computer vision tasks, in the BEV-perspective instead of a perspective given by the viewing direction of the respective environmental sensor system. It is referred to the publication of J. Philion and S. Fidler: "Lift, Splat, Shoot: Encoding Images from Arbitrary Camera Rigs by Implicitly Unprojecting to 3D" (arXiv:2008.0571 1 v1), where computer vision tasks are carried out in the BEV-perspective.

The perception in the BEV-perspective may be based on a predefined grid, as described for multiple sensor modalities in the publication of Z. Liu et. al.: "Multi-task multi-sensor fusion with unified bird's-eye view representation." In 2023 IEEE international conference on robotics and automation (ICRA), pp. 2774-2781.

The larger the considered grid, the more distant object may potentially be detected. On the other hand, the required computational resources, in particular computing time and memory, increase accordingly with the size of the grid.

It is an objective of the present invention to provide an improved concept for object detection in the BEV-perspective, which reduces the required computational resources.

This objective is achieved by the subject matter of the independent claim. Further implementations and preferred embodiments are subject matter of the dependent claims.

The invention is based on the idea to use a grid in the BEV-perspective, whose cell size increases with a distance from the vehicle.

According to an aspect of the invention, a computer-implemented method for object detection in an environment of a vehicle, in particular a motor vehicle, is provided. Therein, sensor data generated by an environmental sensor system of the vehicle and representing the environment is received, in particular from the environmental sensor system or from a buffer or another storage device. A trained machine learning model, MLM, which is trained for object detection in a bird-eye-view-, BEV-, perspective is applied to the sensor data to generate output data. The output data comprises a location of an object in the environment within a predefined grid in the BEV-perspective. A cell size of the grid increases with a distance from the vehicle at least for a predefined direction.

Unless stated otherwise, all steps of the computer-implemented method may be performed by a data processing system, which comprises at least one data processing device, in particular a data processing system of the vehicle. In particular, the at least one data processing device is configured or adapted to perform the steps of the computer-implemented method. For this purpose, the at least one data processing device may for example store a computer program comprising instructions which, when executed by the at least one data processing device, cause the at least one data processing device to carry out the computer-implemented method. The terms "data processing system" and "at least one data processing device" may be used interchangeably.

All data processing devices of the at least one data processing device may be comprised by the vehicle. However, it is also possible that all data processing devices of the at least one data processing device are part of an external computing system external to the vehicle, for example a mobile electronic device, a backend server or a cloud computing system. It is also possible that the at least one data processing device comprises at least one vehicle data processing device of the vehicle as well as at least one external data processing device comprised by the external computing system. The at least one vehicle data processing device may for example be comprised by one or more electronic control units, ECUs, and/or one or more zone control units, ZCUs, and/or one or more domain control units, DCUs, of the vehicle and/or by the environmental sensor system.

In case the at least one data processing device comprises two or more data processing devices, certain steps carried out by the at least one data processing device may be understood such that different data processing devices carry out different steps or different parts of a step. In particular, it is not required that each data processing device carries out the steps completely. In other words, carrying out the steps may be distributed amongst the two or more data processing devices.

From each implementation of the computer-implemented method, a respective implementation of a method for object detection, which is not purely computer-implemented, is obtained by including respective steps of generating the sensor data by the environmental sensor system.

For example, an environmental sensor system can be understood as a sensor system, which is able to generate sensor data or sensor signals, which depict, represent or image an environment of the environmental sensor system. In particular, the ability to capture or detect electromagnetic or other signals from the environment, cannot be considered a sufficient condition for qualifying a sensor system as an environmental sensor system. For example, cameras, in particular cameras operating in the visible range or cameras operating in the infrared range, lidar systems, radar systems or ultrasonic sensor systems may be considered as environmental sensor systems.

The sensor data may therefore comprise, for example, one or more camera images, thermal images, lidar point clouds, lidar depth images, radar data, ultrasonic data and/or respective images generated based on the radar data or ultrasonic data, according to the implementation of the environmental sensor system.

The BEV-perspective may correspond to a perspective according to a viewing direction, which is parallel to a height axis of the vehicle or perpendicular to a plane approximating the ground surface, respectively. Said plane may for example be denoted as BEV-plane.

The grid comprises a plurality of grid cells. The grid cells may, for example, be rectangular, in some embodiments quadratic, grid cells. The cell size corresponds, for example, to a side length of the grid cells or to an area of the grid cells.

According to the invention, the grid cells along a predefined direction from the vehicle, in particular from the environmental sensor system, increases with the distance from the vehicle, in particular with the distance from the environmental sensor system. Therein, a direction is, in particular, a direction parallel to the BEV-plane pointing away from the environmental sensor system. In other words, a direction may be defined by an angle, in particular an azimuth angle also denoted as horizontal angle, of a straight line passing through the position of the environmental sensor system or the orthogonal projection of said position to the BEV-plane, respectively. The angle may for example be defined relative to a longitudinal axis of the vehicle.

It is possible, but not mandatory, that the cell size increases with the distance along the longitudinal axis. It is further possible, but not mandatory either, that the cell size increases with the distance along the longitudinal axis and along all directions parallel to the longitudinal axis.

The increase is, for example, monotonous. That is, given two grid cells along the predefined direction, the one with the larger distance from the vehicle has a larger cell size than the other or both have the same cell size. In other words, the cell size may but does not necessarily increase for each consecutive pair of grid cells along the predefined direction. Rather, it is possible that two or more predefined distance ranges are provided and the cell size along the predefined direction is constant within each distance range but increasing when passing from a certain distance range to the next further away distance range.

For example, the two or more distance ranges may be denoted by R1 = [d0, d1[, R2 = [d1, d2[, ..., RN = [d(N-1), dN[ with N ≥ 2 and distance limits d0 < d1 < ... < d(N-1) < dN. Each distance range Ri has an associated cell size S(Ri). Then, for example, one has S(R1) < S(R2) < ... < S(R(N-1)) < S(RN).

The output data may for example comprise the location of the object in the sense that it comprises an information, which specifies at least one grid cell of the plurality of grid cells which represents the location of the object in the grid. The at least one grid cell representing the location of the object may for example comprise all grid cells of the plurality of grid cells, which overlap with the object in the BEV-perspective or with a bounding box of the object in the BEV-perspective.

Since the cell size increases with the distance at least for the predefined direction, the resolution of the grid decreases with the distance and, consequently, memory as well as computation time to compute the output data are reduced by means of the computer-implemented method according to the invention. Since the reduced resolution affects objects further away from the vehicle more strongly than close objects, the reduced resolution is acceptable.

A trained MLM can be understood as an algorithm, in particular a computer-implemented algorithm, which can reproduce functions that are possible through human intellectual performance concretely or in a broader sense. A trained MLM can also be referred to as a "trained function", for example.

When training an MLM, parameters of the MLM are generally adjusted or updated. The training may be supervised, semi-supervised or unsupervised. The training may also include reinforcement learning or representation learning and/or other known training methods. In particular, the parameters of the MLM can be adapted iteratively over several training steps. In particular, a predefined loss function can be minimized for training. If the MLM is an artificial neural network, ANN, a backpropagation algorithm can be used to adjust the parameters.

In particular, an MLM may include an ANN, a support vector machine, a k-means clustering algorithm, a decision tree, and so on. In particular, an ANN may be or include a deep neural network and/or a convolutional neural network, CNN, in particular a deep CNN, and/or a recurrent neural network, RNN, in particular a recurrent CNN, and/or a transformer network and/or a generative adversarial network, GAN. In several embodiments of the computer-implemented method according to the invention, the MLM is an ANN, for example a CNN or a transformer network.

The MLM used in the computer-implemented method according to the invention may for example be based on a known MLM for object detection in the BEV-perspective, which uses a grid for localization. The cell size of the grid is, however, adjusted such that it increases with the distance as described above. The training of the MLM may also be done as for known MLMs with an adapted grid.

The training of the MLM is, in general, not part of the computer-implemented method according to the invention. Rather, the MLM may have been trained accordingly in advance.

According to several embodiments, the cell size of the grid increases with the distance from the vehicle in a superlinear manner.

In particular, the increase rate of the increase also increases with the distance along the predefined direction.

For example, three or more distance ranges may be given, denoted by R1 = [d0, d1[, R2 = [d1, d2[, ..., RN = [d(N-1), dN[ with N ≥ 3 and distance limits d0 < d1 < ... < d(N-1) < dN. Then, the superlinear increase can be expressed such that S(R(i+2)) - S(R(i+1)) > S(R(i+1)) - S(Ri) for any i = 1, ..., N-2, for example S(R3) - S(R2) > S(R2) - S(R1).

Consequently, the required computational resources are further decreased, in particular compared to a linear increase of the cell size.

According to several embodiments the predefined direction is parallel to a longitudinal axis of the vehicle or parallel to a velocity vector of the vehicle.

In some embodiments, the cell size increases with the distance along the longitudinal axis and along all directions parallel to the longitudinal axis or the cell size increases with the distance along the velocity vector and along all directions parallel to the velocity vector.

According to several embodiments, the cell size increases with an increasing horizontal angle with respect to the longitudinal axis of the vehicle or with respect to the velocity vector of the vehicle for at least a predefined distance from the vehicle.

Therefore, the required computational resources are further reduced. The reduced resolution of the grid for larger horizontal angles is, in particular acceptable, since the most relevant objects are expected for smaller horizontal angles.

According to several embodiments encoded features are generated by applying at least a trained first encoder module of the MLM to the sensor data. The output data is generated depending on the encoded features.

In particular, the encoded features are included by applying at least one first module of the MLM to the sensor data, the at least one first module comprising the trained first encoder module.

The first encoder module does not need to operate in the BEV-perspective or in the respective BEV-domain. Thus, well established computer vision encoders may be used.

According to several embodiments, the encoded features are transformed from a viewing perspective of the environmental sensor system into the BEV-perspective. The output data is generated depending on the transformed encoded features.

The transformation is, in particular, essentially a geometric operation, which may depend on the intrinsic parameters of the environmental sensor system and/or on the pose of the environmental sensor system with respect to the vehicle. In case the environmental sensor system is a camera, these are commonly denoted as intrinsic and extrinsic calibration parameters, respectively. Thus, a transformation module of the MLM used for transforming the encoded features into the BEV-perspective is not necessarily a trained module.

According to several embodiments, further encoded features are generated by applying at least a trained second encoder module of the MLM to the transformed encoded features. The output data is generated depending on the further encoded features.

In particular, the encoded features are included by applying at least one second module of the MLM to the transformed encoded features, the at least one second module comprising the trained second encoder module.

According to several embodiments, the output data is generated by applying a trained decoder module, in particular a trained object detection decoder module, of the MLM to the further encoded features.

The decoder module is, in particular, trained to predict the location of the object according to the grid with increasing cell size. Thus, also the training effort for the decoder module and the MLM overall is reduced.

According to several embodiments, further output data is generated by applying at least a trained further decoder module, in particular a further object detection decoder module, to the encoded features, wherein the further output data comprises a further location of the object according to the viewing perspective of the environmental sensor system.

In other words, the encoded features are used in multiple ways namely for object detection in the viewing perspective of the environmental sensor system and, after further processing as described above, for object detection in the BEV-perspective. Thus, the particular advantages of both approaches may be combined and exploited in such embodiments.

According to several embodiments, fused output data is generated by fusing the output data and the further output data. The object is tracked depending on the fused output data.

By exploiting the results from both, the BEV-based object detection and the object detection in the viewing perspective of the environmental sensor system, the reliability of the object tracking may be increased.

According to several embodiments, the environmental sensor system is a camera, in particular a thermal camera.

Thus, the sensor data includes one or more camera images, in particular thermal images, of the environment.

Thermal cameras show a particularly good performance for object detection in long distances. Thus, the reduced resolution at large distances according to the invention is particularly suitable if a thermal camera is used to generate the sensor data.

According to a further aspect of the invention, a method for guiding a vehicle at least in part automatically is provided. Therein, a computer-implemented method according to the invention is carried out. At least one control signal for guiding the vehicle at least in part automatically is generated depending on the output data and/or assistance information for assisting a driver of the vehicle at guiding the vehicle is generated depending on the output data.

According to a further aspect of the invention, a data processing system is provided, which is configured to carry out a computer-implemented method according to the invention.

The terms "data processing system" and "at least one data processing device" may be used interchangeably in the present disclosure. In the present disclosure, a data processing device, also denoted as computing device, may for example be understood as a device with processing circuitry for processing data. A data processing device can therefore perform computing operations in order to process data. An indexed access to a data structure, for example a look-up table, LUT, or a database may also be considered as a computing operation. Data processing that is partially or fully implemented in hardware can also be considered a computing operation.

In particular, a data processing device may include one or more computers, one or more microcontrollers, and/or one or more integrated circuits, for example, one or more application-specific integrated circuits, ASIC, one or more field-programmable gate arrays, FPGA, and/or one or more systems-on-a-chip, SoC. A data processing device may also include one or more processors, for example one or more microprocessors, one or more central processing units, CPU, one or more graphics processing units, GPU, and/or one or more signal processors, in particular one or more digital signal processors, DSP. The data processing device may also include a physical or a virtual cluster of computers or other of said devices.

A data processing device may also comprise one or more hardware and/or software interfaces, for example for receiving and/or providing data, respectively.

A data processing device may also comprise one or more memory devices. Therein, a memory device may be implemented as a volatile memory, for example a dynamic random access memory, DRAM, or a static random access memory, SRAM, or as a nonvolatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

According to a further aspect of the invention, an electronic vehicle guidance system comprising a data processing system according to the invention and a control system is provided. The control system is configured to generate at least one control signal for guiding the vehicle at least in part automatically depending on the output data and/or assistance information for assisting a driver of the vehicle at guiding the vehicle depending on the output data.

The at least one control signal may for example be provided to one or more actuators of the vehicle, including for example one or more braking actuators and/or one or more steering actuators and/or one or more propulsion motors of the vehicle. The one or more actuators may affect a longitudinal and/or lateral control of the vehicle in order to guide the vehicle at least in part automatically based on the at least one control signal.

The assistance information may be output by means of an output device of the vehicle, for example a display and/or an audio output system and/or a haptic output system.

The control system may be a part of the data processing system according to the invention or a further data processing system.

According to several embodiments, the electronic vehicle guidance system comprises the environmental sensor system.

According to a further aspect of the invention, a computer program comprising instructions is provided. When the instructions are executed by a data processing system, the instructions cause the data processing system to carry out a computer-implemented method according to the invention.

The instructions may be provided as program code, for example. The program code can for example be provided as binary code or assembler and/or as source code of a programming language, for example C, and/or as program script, for example Python.

According to a further aspect of the invention, a further computer program comprising further instructions is provided. When the further instructions are executed by an electronic vehicle guidance system according to the invention, in particular by the data processing system of the electronic vehicle guidance system, the further instructions cause the electronic vehicle guidance system to carry out a method for guiding a vehicle at least in part automatically according to the invention.

The further instructions may be provided as program code, for example. The program code can for example be provided as binary code or assembler and/or as source code of a programming language, for example C, and/or as program script, for example Python.

According to a further aspect of the invention, a computer-readable storage medium storing a computer program and/or a further computer program according to the invention is provided.

The computer program, the further computer program and the computer-readable storage medium are respective computer program products comprising the instructions and/or the further instructions.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features, which go beyond or deviate from the combinations of features set forth in the recitations of the claims may be comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,
- Fig. 1: shows schematically a vehicle with an exemplary embodiment of an electronic vehicle guidance system according to the invention and a grid according to an exemplary embodiment of a computer-implemented method for object detection according to the invention;
- Fig. 2: shows schematically a vehicle with a further exemplary embodiment of an electronic vehicle guidance system according to the invention and a grid according to a further exemplary embodiment of a computer-implemented method for object detection according to the invention;
- Fig. 3: shows a scheme for threat classification according to an exemplary embodiment of a method for guiding a vehicle at least in part automatically according to the invention;
- Fig. 4: shows a schematic block diagram of an MLM for use in a further exemplary embodiment of a computer-implemented method for object detection according to the invention; and
- Fig. 5: shows a schematic block diagram of an MLM for use in a further exemplary embodiment of a computer-implemented method for object detection according to the invention.

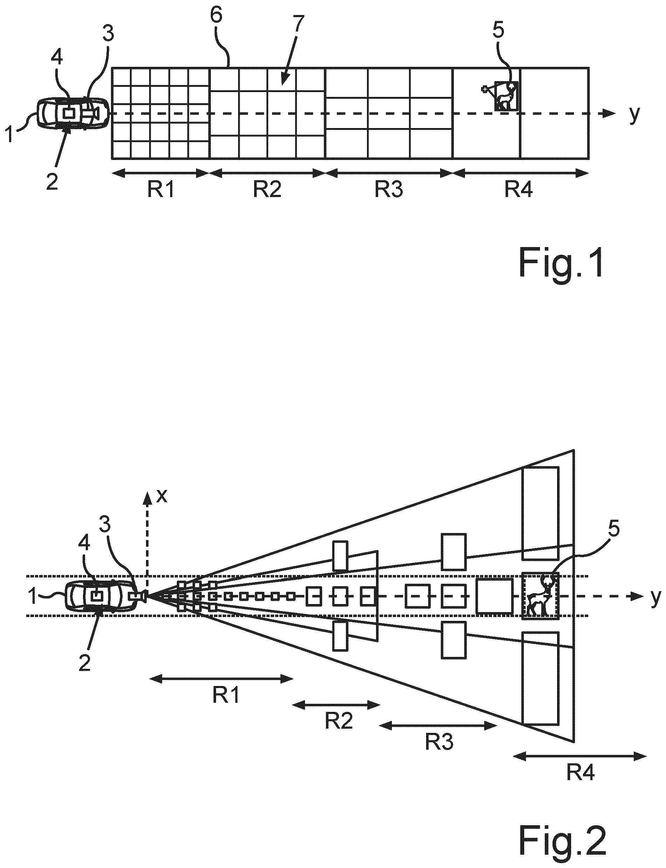

Fig. 1 shows schematically a vehicle 1 with an exemplary embodiment of an electronic vehicle guidance system 2 according to the invention. The electronic vehicle guidance system 2 comprises a data processing system 4 and the vehicle 1 or the electronic vehicle guidance system 2 comprises an environmental sensor system 3, for example a thermal camera. The data processing system 4 is configured to carry out a computer-implemented method for object detection according to the invention to generate output data 12, which comprises a location of an object 5 in the environment of the vehicle 1, in particular in a BEV-perspective.

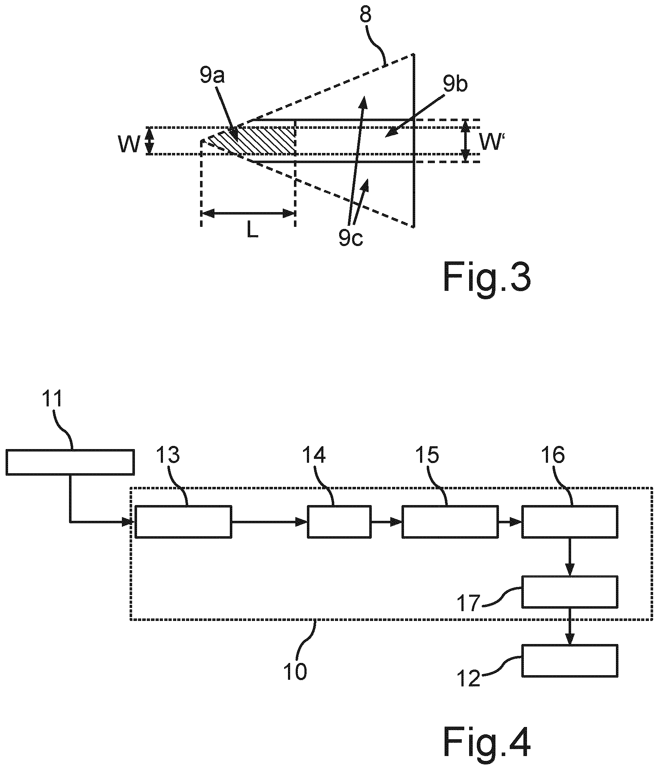

To this end, the data processing system 4 receives sensor data 11 generated by the environmental sensor system 3 of the vehicle 1 and representing the environment. The sensor data 11 may, for example, comprise one or more thermal camera images. A trained MLM 10, as shown schematically for example in Fig. 4, trained for object detection in the BEV-perspective is applied to the sensor data 11 to generate the output data 12. The output data 12 comprises a location of an object 5 in the environment within a predefined grid 6 in the BEV-perspective, as shown in Fig. 1. The output data may, for example, comprise information that indicates the gird cell 7 or grid cells 7 that are occupied by the object 5. Therein a cell size of the grid 6 increases with a distance from the vehicle 1 at least for a predefined direction.

The MLM 10 may for example be or comprise a trained artificial neural network, ANN, in particular a convolutional neural network, CNN. As shown schematically in Fig. 4, the MLM 10 may comprise a first encoder module 13, which is applied to the sensor data 11 to generate encoded features. The first encoder module 13 may for example be designed according to a known ANN or CNN architecture, for example ResNet or EfficientNet and so forth. In some embodiments, the encoded features may be generated to apply first the first encoder module 13 to the sensor data and then apply one or more further convolutional layers 14 to the output of the first encoder module 13.

In a non-limiting example, the dimensions of the sensor data 11, for example the thermal image, are 1×640×480, wherein the first number stands for the number of channels, the second number stands for the width, and the third number stands for the height. The dimensions of the encoded features may be 2×64×64×54. For example, the output of the first encoder module 13 may have dimensions 2×512×64×54 in some embodiments.

The encoded features are for example transformed from a viewing perspective of the environmental sensor system 3 to the BEV-perspective by a geometric transformation module 15. The geometric transformation module 15 may also change the dimensions of the encoded features, for example to 64×84×24.

For example, further encoded features may be generated by applying a trained second encoder module 16 of the MLM 10, which is designed to learn the features from BEV-space, to the transformed encoded features. For example, dimensions of the further encoded features may be 124x84x24. The output data 12 is generated for example by applying a trained decoder module 17 of the MLM 10 to the further encoded features.

As indicated in Fig. 1, the cell size may for example increase from the environmental sensor system 3 in the direction y of the longitudinal axis of the vehicle 1 or the current velocity vector of the vehicle 1. In the example of Fig. 1, the cell size also increases for all other directions parallel to the direction y.

For example, several distance ranges R1, R2, R3, R4 with increasing cell size may be defined starting with R1 directly at the vehicle 1. The cell size is for example constant within each distance ranges R1, R2, R3, R4. In the example of Fig. 1, the cell size is the smallest for the closest distance range R1, increases for the next further distance range R2, increases further for the next further distance range R3 and increases once again for the next further distance range R4. The increase of the cell size may, in particular, be superlinear or, in other words, the increase as a function of the distance may be faster than a linear increase.

In a non-limiting example, the range R1 is given by [0 m, 12 m[, the range R2 is given by [12 m, 25 m[, the range R3 is given by [25 m, 50 m[, and the range R4 is given by [50 m, 130 m[. The grid cells 7 may for example be quadratic with a side length d, which represents the cell size. The grid cells may 7 also be rectangular but not quadratic with an area of d², which may represent the cell size in this case. For example, it may be provided that d = 40 cm for R1, d= 100 cm for R2, d = 1,000 cm for R3 and d = 10,000 cm for R4.

As shown in Fig. 2, it is also possible that the cell size changes with a horizontal angle with respect to the direction y. In particular, the cell size may be smallest for a horizontal angle or zero with respect to the direction y.

The electronic vehicle guidance system 2, for example the data processing system 4, comprises a control system, which is configured to generate at least one control signal for guiding the vehicle 1 at least in part automatically depending on the output data 12 and/or to generate assistance information for assisting a driver of the vehicle 1 at guiding the vehicle 1 depending on the output data 12.

The assistance information may for example comprise a warning for the driver. For example, the control system may classify the detected object 5 whether it is likely to represent a threat or not based on the position relative to the vehicle 1. Fig. 3 shows a pictorial representation of the different categories of threat classification based on different positions of the object 5 in the field of view 8 of the environmental sensor system 3.

For example, a first region 9a may be defined by a maximum width w around the longitudinal axis of the vehicle and a maximum distance L. A second region 9b may be defined by a portion of the field of view 8 within a further maximum width W but outside of the first region 9a. A third region 9c corresponds to the portion of the field of view 8, which is not inside the first region 9a or the second region 9b.

For example, the object 5 may be classified as an informational threat object, if it is detected in the third region 9c, as an advisory threat object, if it is detected in the second region 9b, and as an alert threat object, if it is detected in the first region 9a.

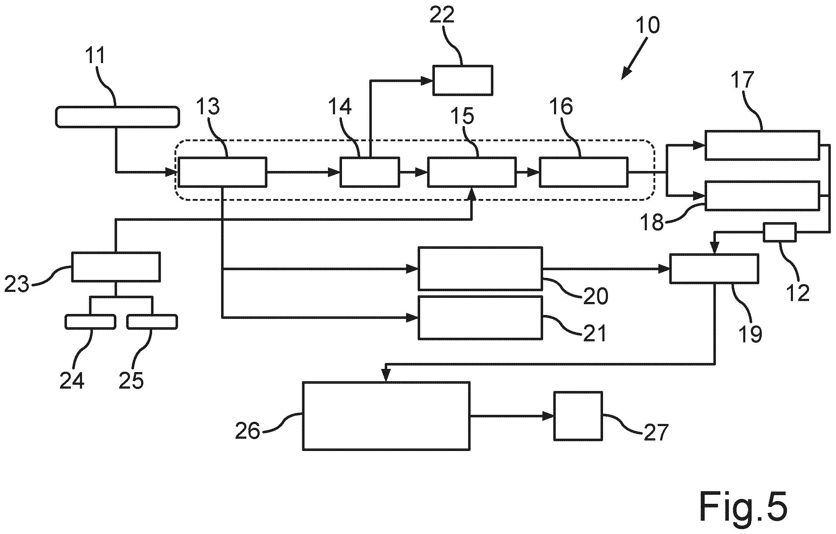

Fig. 5 shows a block diagram of an MLM 10 for use in a further exemplary embodiment of the computer-implemented method for object detection according to the invention. The MLM 10 of Fig. 5 is based on the MLM of Fig. 4.

In particular, a sensor calibration module 23 may provide the extrinsic calibration data 24 and intrinsic calibration data 25 of the environmental sensor system 3 to the geometric transformation module 15, which may transform the encoded features in the BEV-perspective depending on the extrinsic calibration data 24 and intrinsic calibration data 25.

For example, the MLM 10 may comprise a first further decoder module 18, which is applied to the further encoded features. The output data 12 comprises an output of the decoder module 17 and an output of the first further decoder module 18. The decoder module 17 and the first further decoder module 18 may be different types of object detection decoders. For example, the decoder module 17 may determine a bounding box for the object 5 and a class label according to one of a plurality of predefined object classes. The output of the decoder module 17 may then comprise the information, which grid cells 7 are occupied by the bounding box or the object, respectively, and the class label. The first further decoder module 18 may for example determine a bounding box for the object 5 as well but no classification. The output of the first further decoder module 18 may then comprise the information, which grid cells 7 are occupied by the bounding box or the object, respectively.

For example, the MLM 10 may comprise a trained second further decoder module 20, which may be applied to the encoded features or to the output of the encoder module 13. The second further decoder module 20 is, in particular, also trained for object detection as explained with respect to the decoder module 17 or the first further decoder module 18. However, the second further decoder module 20 operates in the domain of the viewing perspective of the environmental sensor system 3 rather than in the BEV-perspective.

For example, fused output data 12 may be generated by fusing the output data 12 and the output data of the second further decoder module 20 by a fusion module 19 of the MLM 10. The fusion helps to improve the detection performance of the system.

The object 5 may for example be tracked depending on the fused output data 12 by a tracking module 26 using a known object tracking algorithm. For example, the control system of the electronic vehicle guidance system 2 may use the tracked object 27 to generate the at least one control signal and/or the assistance information.

The tracking process establishes spatial and temporal relationships among the detected objects 5 and the vehicle 1. It takes input as a fused representation of detected objects 5 in terms of the fused output data 12. It is for example used to track the detected objects 5 in order to localize them temporarily. This helps to estimate and predict the next state of the detected objects 5. The tracking module 26 may be capable of handling missed detections, false detections and temporary occlusions of the objects by estimating their positions based on a motion model and a movement history. Main tasks of the tracking module 26 may include data association, tracking management and filtering. Data association is to associate new object measurements to existing object 5 tracks whenever available. Each detected object 5 is assigned with a unique tracking ID and it is maintained by the track management block. When a new object 5 is detected, a new tracking instance may be created. Once the tracking instances are associated with new measurements, the filtering block helps to update and correct the objects' states. It also may predict the next state of the filtered object states, which aids decision making tasks such as path planning and motion planning.

In some embodiments, a third further decoder module 21 is provided, which is also applied to the encoded features or to the output of the encoder module 13. The third further decoder module 21 is for example trained for detecting a degradation or soiling of the environmental sensor system 3.

In some embodiments, a fourth further decoder module 22 is provided, which is also applied to the encoded features or to the output of the encoder module 13. The fourth further decoder module 22 is for example trained for depth estimation.

In some embodiments, the environmental sensor system 3 is a thermal camera, also denoted as infrared camera.

As described, the approach according to the invention may reduce the required computational resources by using a grid in the BEV-perspective, whose cell size increases with a distance from the vehicle 1.

For large grids 6, it is expected to detect objects at far distances earlier. This increases the amount of data to be processed at each instant and increases the required processing power. Thus, the BEV grid 6 is represented with smaller grid cells 7 nearer to the vehicle 1 and the resolution becomes smaller moving farther from the vehicle 1.

In some embodiments, a dynamic BEV representation of features is achieved by scaling the grid 6 logarithmically based on vehicle's 1 speed. This helps to further reduce the required computational power. For example, four grid zones with different cell size may be defined based on the vehicle's 1 speed and the grid zones may be expanded or contracted dynamically. For example, the grid 6 may scale dynamically to a maximum distance of 130 m at high speeds, to 50 m at medium speeds and to 25 m at low speeds. This may ensure that the highest amount of computation power is utilized only at high vehicle speeds.

Autonomous or semi-autonomous driving functions according to level 3 or above may involve multiple sensors with more than one sensor modality in order to perceive the surrounding environment precisely. Lidar systems, radar systems, visible range cameras and ultrasonic sensor systems are most commonly used perception sensors. Different sensors provide complementary and competitive information that may be effectively fused in order to generate the combined representation of the environment. The perception of vehicle's 1 surroundings helps to interpret the environment more accurately, for example by 3D object detection and classification of both static and dynamic objects. Thus, multi-sensor fusion plays an important role for accurate and reliable perception of the environment. Existing multi sensor suites are best suited to address the challenges during daylight and are not supported during dark scenarios and adverse weather conditions. The poor visibility of vulnerable road users, VRUs, especially pedestrians, animals and cyclists at night is a major reason for accidents reported by vehicles equipped with autonomous or semi-autonomous driving functions. Therefore, thermal cameras may contribute to a more robust system that performs well in all weather and lighting conditions.

## Claims

1. Computer-implemented method for object detection in an environment of a vehicle (1) wherein
- sensor data (11) generated by an environmental sensor system (3) of the vehicle (1) and representing the environment is received;
- a trained machine learning model, MLM, (10) trained for object detection in a bird-eye-view-, BEV-, perspective is applied to the sensor data (11) to generate output data (12);
- the output data (12) comprises a location of an object (5) in the environment within a predefined grid (6) in the BEV-perspective;
- wherein a cell size of the grid (6) increases with a distance from the vehicle (1) at least for a predefined direction.

2. Computer-implemented method according to claim 1, wherein the output data (12) specifies at least one grid cell (7) of the grid (6), which represents the location of the object (5) in the grid (6).

3. Computer-implemented method according to one of the preceding claims, wherein the cell size of the grid (6) increases with the distance from the vehicle (1) in a superlinear manner.

4. Computer-implemented method according to one of the preceding claims, wherein the predefined direction is parallel to a longitudinal axis of the vehicle (1) or parallel to a velocity vector of the vehicle (1).

5. Computer-implemented method according to claim 4, wherein for a predefined distance from the vehicle (1), the cell size increases with an increasing horizontal angle with respect to the longitudinal axis of the vehicle (1) or with respect to the velocity vector of the vehicle (1).

6. Computer-implemented method according to one of the preceding claims, wherein
- encoded features are generated by applying at least a trained first encoder module (13) of the MLM (10) to the sensor data (11); and
- the output data (12) is generated depending on the encoded features.

7. Computer-implemented method according to claim 6, wherein
- the encoded features are transformed from a viewing perspective of the environmental sensor system (3) to the BEV-perspective; and
- the output data (12) is generated depending on the transformed encoded features.

8. Computer-implemented method according to claim 7, wherein
- further encoded features are generated by applying at least a trained second encoder module (16) of the MLM (10) to the transformed encoded features; and
- the output data (12) is generated depending on the further encoded features.

9. Computer-implemented method according to claim 8, wherein the output data (12) is generated by applying a trained decoder module (17, 18) of the MLM (10) to the further encoded features.

10. Computer-implemented method according to one of claims 6 to 9, wherein further output data is generated by applying at least a trained further decoder module (20) of the MLM (10) to the encoded features, wherein the further output data comprises a further location of the object (5) according to the viewing perspective of the environmental sensor system (3).

11. Computer-implemented method according to claim 10, wherein
- fused output data is generated by fusing the output data (12) and the further output data; and
- the object (5) is tracked depending on the fused output data.

12. Computer-implemented method according to one of the preceding claims, wherein the environmental sensor system (3) is a camera or a thermal camera.

13. Method for guiding a vehicle (1) at least in part automatically, wherein a computer-implemented method according to one of the preceding claims is carried out and
- at least one control signal for guiding the vehicle (1) at least in part automatically is generated depending on the output data (12); and/or
- assistance information for assisting a driver of the vehicle (1) at guiding the vehicle (1) is generated depending on the output data (12).

14. Data processing system (4), which is adapted to carry out a computer-implemented method according to one of claims 1 to 12.

15. Electronic vehicle guidance system (2) comprising a data processing system (4) according to claim 14 and a control system, which is configured to generate
- at least one control signal for guiding the vehicle (1) at least in part automatically depending on the output data (12); and/or
- assistance information for assisting a driver of the vehicle (1) at guiding the vehicle (1) depending on the output data (12).

16. Electronic vehicle guidance system (2) according to claim 15, further comprising the environmental sensor system (3).

17. Computer program product comprising
- instructions, which, when executed by a data processing system (4), cause the data processing system (4) to carry out a computer-implemented method according to one of claims 1 to 12; and/or
- further instructions, which, when executed by an electronic vehicle guidance system (2) according to one of claims 15 or 16, cause the electronic vehicle guidance system (2) to carry out a method according to claim 13.
